# EUROPEAN PATENT SPECIFICATION

(11) **EP 1 559 828 B1**
(45) Date of publication and mention of the grant of the patent: **25.06.2014**
(21) Application number: 04425051.2
(22) Date of filing: 28.01.2004
(51) Int. Cl.: D06F 58/04, D06F 58/02

(54) **Improved laundry drying device**
Verbesserter Wäschetrockner
Sèche-linge amélioré

(43) Date of publication of application: 03.08.2005
(73) Proprietor: Candy S.p.A., 20861 Brugherio, MONZA E BRIANZA (IT)
(72) Inventor: Fumagalli, Silvano, 20900 Monza (Monza e Brianza) (IT)
(74) Representative: Leihkauf, Steffen Falk

(56) References cited:
- FR-A- 2 648 484
- JP-A- 59 228 897
- PATENT ABSTRACTS OF JAPAN vol. 2000, no. 04, 31 August 2000 (2000-08-31) -& JP 2000 005493 A (HITACHI LTD), 11 January 2000 (2000-01-11)

## Description

The present invention relates to a device for drying laundry, of the dryer or washer-dryer type providing the drying of laundry by means of an airflow.

The drying circuit of such drying devices typically comprises a basket/tank unit, a suction unit, a heat exchanger and an electrical resistance heating unit.

In a drying circuit known as a closed circuit, the airflow caused by the suction unit is heated by the electrical resistances and conveyed into the basket or drum, where, by passing through the wet laundry, it causes the evaporation of the air contained in the fabrics. In the heat exchanger, generally of the rain type, the moist air is cooled by a cold water flow or a cold air flow. Due to the cooling effect the steam condenses and is collected and released together with the cooling water. The dehumidified air is then sucked by the suction unit and made to re-circulate.

However, in the case of a drying circuit known as an open circuit, the drying air is sucked from the environment and, having passed through the laundry, absorbing the moisture thereof, it is released directly into the environment.

Closed circuit drying devices have high energy consumption and a medium - low drying performance. Open circuit drying devices, despite having a lower energy consumption than those with closed circuits, can only be activated in rooms equipped with sufficient aeration, thus requiring in most cases forced ventilation.

Furthermore, it is known to provide drying machines for domestic use that have basic equipment with an open circuit, to the suction and release apertures thereof it is possible to couple on the outside of the base apparatus a separate accessory device for converting the drying machine into a closed circuit condensing device.

A convertable dryer according to the preamble of claim 1 is disclosed in JP 2000-5493.

Both condensing dryer machines and those that can be converted are structurally complex and costly and the convertible devices enable the conversion of the system from open to closed circuit only before their installation for example in a laundry, as conversion entails a variation in the overall dimensions of the drying machine.

The object of the present invention is therefore to provide a drying device having characteristics such as to overcome the drawbacks mentioned with reference to the state of the art.

This and other objects are achieved by a device for drying laundry according to claim 1.

In order to better understand the invention and appreciate the advantages thereof, a number of embodiments will be described below as non-limiting examples, referring to the attached figures, wherein:

figure 1 is a schematised longitudinal sectional view of a drying machine in a first embodiment;

figure 2 is a schematised transverse section view on several levels of the drying machine in figure 1;

figure 3 is a schematised longitudinal sectional view on several levels of a drying machine according to the invention in a second embodiment;

figure 4 is a schematised transverse sectional view on several levels of the drying machine in figure 3;

figure 5 is a sectional view of a detail of the drying machine in figures 3 and 4;

figure 6 is a sectional view of a detail of the drying machine in figures 1 and 2;

With reference to the figures, a laundry drying machine 1 comprises a casing 2 inside which is located a basket or drum 3 for housing the laundry. The basket 3 is provided with an inlet aperture 4 for a drying airflow 5 and an outlet aperture 6 for the moist air 7. Said apertures are communicating with a system of pipes with associated ventilator means, such as a ventilator rotor 8 driven by an electric motor 9, to convey the drying airflow 5, through the inlet aperture 4 in to the basket 3 and remove the moist air 7 from the latter through the outlet aperture 6.

Suitable heating means being in a heat-exchange relationship with the drying air 5 are also provided, such as a electrical resistance 10, arranged in the airflow 5 upstream from the inlet aperture 4 and suitable to heat the air 5 before it enters the basket 3.

Condenser means, such as a heat exchanger, are associated to the abovementioned system of piping and suitable to dehumidify the moist air 7 removed from the basket 3.

Advantageously, the laundry drying machine 1 further comprises means for moving the basket 3 in such a way to turn and spin the laundry, exposing it to the drying airflow 5. Such means comprise, for example an electric motor (not shown) causing the basket 3 to rotate, preferably with an alternating sense of direction.

The system of piping comprises a suction mouth 11 for withdrawing environment air 12 from outside the casing 1 and a release mouth 13 for the expulsion of air into the environment and it defines or provides inside the casing 1:
- an open circuit 16, 15, 14, 17 that enables the ventilation means 8, 9 to suck air from the environment, convey it into the basket 3 and remove it from the latter to release it back into the environment, and the heating means 10 to heat the sucked air before it enters the basket 3 (open circuit) and a

- a closed circuit 15, 16 that enables the ventilation means 8, 9 to convey the air into the basket 3 and remove it from the latter to convey it back into the basket 3, to the heating means to heat the air before it enters the basket 3 and the condenser means 20, 21, 22 to dehumidify the air before it is heated (closed circuit), wherein commutation means 18, 19 are provided, suitable to convert, selectively, said system of piping in said first and second circuit.

Said commutation means make it possible to operate the drying machine, selectively, by said open circuit or by said closed circuit.

In accordance with the invention, the commutation means can be adjusted so as to enable the operation of the drying machine simultaneously by said open circuit and said closed circuit, wherein the relationship between the flow rate in the open circuit and that in the closed circuit is preferably adjustable and settable as desired.

The system of piping comprises an air removal tube 14 in fluid communication with the outlet aperture 6 of the basket 3, a delivery pipe 15 in fluid communication with the inlet aperture 4 of the basket 3, a suction pipe 16 in fluid communication with the suction mouth 11 and a release pipe 17 in fluid communication with the release mouth 13.

In accordance with the invention, the air removal pipe 14 is put in fluid communication with the delivery pipe 15 by the interposition of a delivery flow regulator 18, suitable to regulate the aperture of flow between the air removal pipe 14 and that of delivery 15 and the air removal pipe 14 is put in fluid communication with the release pipe 17 by the interposition of a release flow regulator 19, suitable to regulate the flow aperture between the air removal pipe 14 and that of release 17. The delivery pipe 15 on the other hand is put in fluid communication with the suction pipe 16 by the interposition of a suction flow regulator 18 suitable to regulate the flow aperture between the suction pipe 16 and that of delivery 15.

In accordance with one embodiment of the invention, the abovementioned delivery 18, suction 18 and release 19 flow regulators can be operated independently of one another or in dependence of one another by manual activation, such as by one or more handles or levers 32, or by suitable automatic activation means, such as one or more electric activation motors (not shown in figures).

In accordance with the embodiment shown in the figures, the delivery flow regulator 18 and the suction flow regulator 18 are united in a single delivery flow deviator device 18, suitable to put the delivery pipe 15, as desired, into fluid connection with the air removal pipe 14 or with the suction pipe 16.

Advantageously, the delivery flow deviator 18 is suitable to establish i.e. compose the airflow fed into the delivery pipe 15 by adjusting the single flow rates of the airflows originating from the air removal 14 and suction 16 pipes.

In accordance with a further embodiment of the invention, a single deviator (not shown in the figures)is provided, suitable to compose the airflow fed into the delivery pipe 15 by regulating the single flow rates of the airflows originating from the air removal 14 and suction 16 pipes, wherein said deviator is further suitable to deviate directly into the release pipe 17 that portion of the airflow of the air removal pipe 14 that is not fed into the delivery pipe 15.

Advantageously, the condenser means are comprises a heat exchanger 20, 21, 22 arranged in the pathway of the air removal pipe 14 that preferably forms the casing thereof.

The heating resistance 10 on the other hand, is arranged in the pathway of the delivery pipe 15, preferably lodged inside thereof.

According to one embodiment, the air removal pipe 14, formed by a tubular structure in plastic bearing a lint filter 33, extends from the outlet aperture 6 of the basket 3 preferably towards the lower portion of the drying machine 1, where said pipe 14 forms a condensation chamber 20 fitted with a tank 21 for cool water that can be fed by the water supply through a special aperture, preferably a spray nozzle or nebuliser 22 arranged in the wall of the air removal pipe 14 in a position higher than the maximum water level 24. The tank 21 serves both as a container for the cold water of the water supply that cools the air removed from the basket 3 condensing the moisture thereof, and as a collection tank for the condensation itself.

In the lowest point of the tank 21 a drain 25 is provided associated to suitable drainage means, such as a pump 26, suitable to drain, preferably in a sequential or intermittent way part or all of the liquid contained in the tank 21 to maintain or restrict the abovementioned maximum water level 24.

The air removal pipe 14, in particular a portion thereof arranged downstream from the condensation chamber 20, seen in the direction of the airflow, outlets into said delivery commutator 18 which in turn has, in addition to the fluid connection with the air removal pipe 14, a fluid connection with the delivery pipe 15 and one with the suction pipe 16.

Advantageously, the delivery commutator 18 comprises a preferably cylindrical or conical casing 27 fitted with three apertures 28, 29, 30 made in different positions that make the three connections mentioned above, and a shutter element 31, also with an at least partially cylindrical or conical form, held in a swivelling way inside the casing 27.

The shutter element 31, according to the angular position thereof in relation to the casing 27 of the delivery commutator 18, is suitable to regulate respectively the opening and closure of the fluid connections (apertures 28, 29, 30) of the delivery commutator 18 with the suction 16 and air removal pipes 14 and to deviate the respective airflows in the delivery pipe 15.

The delivery pipe 15 extends from the delivery commutator 18 to the inlet aperture 4 of the basket 3.

Advantageously, in the part of the delivery pipe 15, immediately adjacent to the delivery commutator 18, the rotor 8 is arranged and, preferably, the axis of rotation of the motor 9 and of the rotor 8 coincide with the axis of rotation of shutter adjustment 31.

The heating resistance 10 is arranged in the delivery pipe 15 downstream from the rotor 8 seen in the direction of the airflow.

The suction pipe 16, formed by a special plastic tube or by suitable spaces made inside the casing 2 of the drying machine 1 extends from the suction mouth 11 (that can be made as a single aperture, grid or by a number of apertures in the casing 2) until the aperture 29 of the delivery commutator 18, making the supplying thereof with fresh air 12 from the outside environment.

The release pipe 17, formed by a special plastic tube or by suitable spaces made inside the casing 2 of the drying machine 1 extends from a flow regulator 19 connected with air removal pipe 14, preferably in a zone thereof down stream from the condensation chamber 20, until the release mouth 11 (that can be made for example as a single aperture, grid or number of apertures in the casing 2).

Advantageously, the flow regulator 19 comprises a preferably cylindrical or conical casing fitted with two apertures that make the fluid communication between the air removal pipe 14 and the release pipe 17, and a shutter element, also with an at least partially cylindrical or conical form, held in a swivelling way inside the casing.

The shutter element, according to the angular position thereof in relation to the casing of the flow regulator, is suitable to regulate respectively the opening and closure of the fluid connection between the air removal 14 and release pipes 17, regulating the airflow released outside the drying machine 1.

According to one embodiment, both the delivery commutator 18 and the release flow regulator 19 can be activated manually by special regulation levers 32.

In accordance with a further embodiment, the delivery commutator 18 and the release flow regulator 19 can be automatically activated by special activation means, such as one or more regulation motors that can be controlled by a control unit of the drying machine 1.

The operation of the drying machine 1 according to the invention is described below.

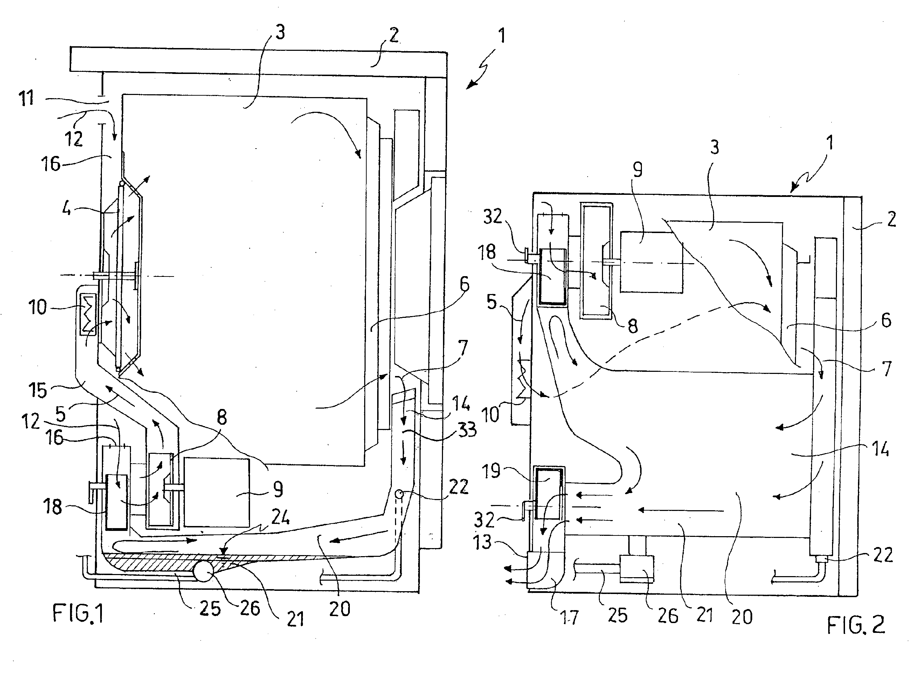

Should the drying machine 1 be installed in a well-aerated room that enables an expulsion of steam from the drying machine 1, the latter can easily be commutated, by the activation of levers 32, to an open circuit operation, as shown in figures 1 and 2.

The environment air is sucked through the suction mouth 11 and conveyed by the rotor 8 along the suction pipe 16, through the delivery commutator 18 into the delivery pipe 15, inside which the air is heated by the resistance 10 before entering the basket 2 where it causes the evaporation of the moisture contained in the laundry. The moist air is removed from the basket 2 through the outlet aperture 6 and conveyed along the air removal pipe 14, through the open flow regulator 19 into the release pipe 17 and, through the release mouth 13, it is released outside the drying machine 1.

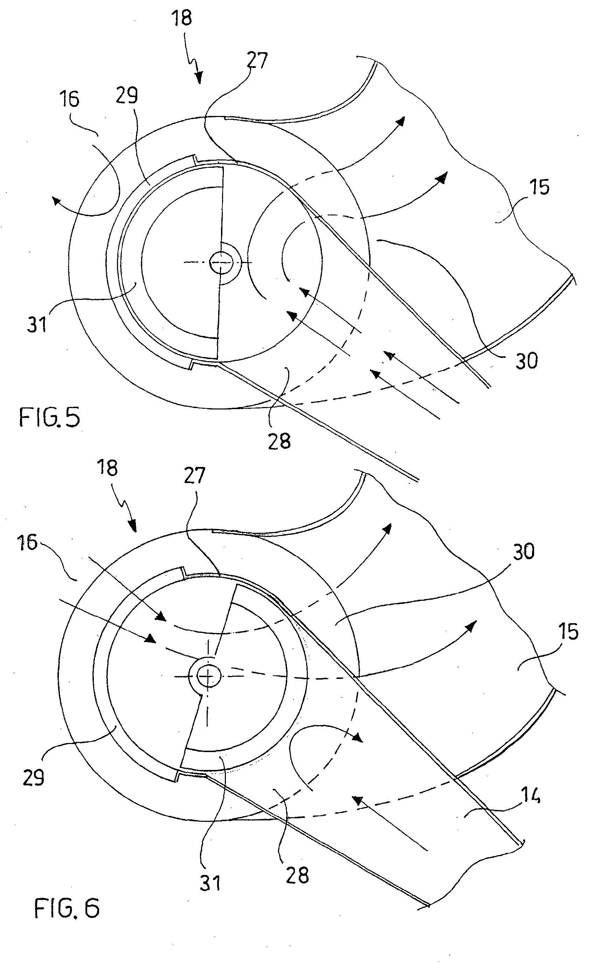

In this configuration, the delivery commutator 18 prevents the suction of air from the air removal pipe 14 into the delivery pipe 15, as can be shown for example by figure 6.

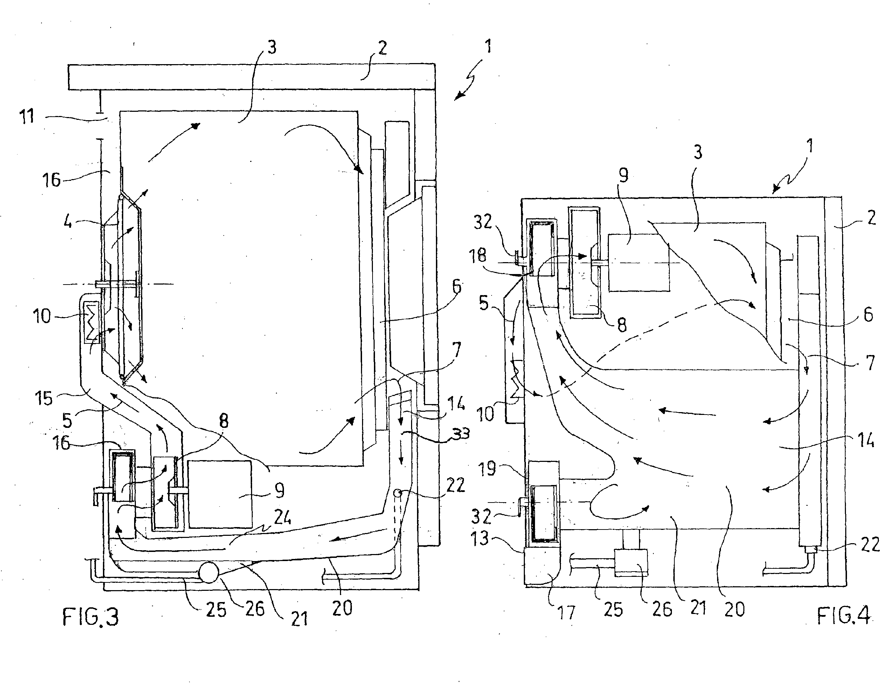

Should the drying machine 1 be installed in a room that is not sufficiently aerated that requires a dehumidification of the drying air in the drying machine 1, the latter can easily be commutated, by the activation of the levers 32, to closed circuit, i.e. condensing operation, as shown in figures 3 and 4.

The moist air removed from the basket 2 through the outlet aperture 6 is sucked by the rotor 8, through the lint filter 33, into the air removal pipe 14, passing through the condensation chamber 20 inside it.

Cool water, withdrawn from the water supply, is fed by the nebuliser nozzle 22 directly into the air removal pipe 14 forming inside thereof, in particular in the condensation chamber 20, a cold mist and it is collected in the tank 21 forming a cold water surface that substantially interests the entire widened zone of the air removal pipe 14, in other words, all of the condensation chamber 20.

The moist air, by passing through the condensation chamber 20, is cooled by both the cold mist and the cold water surface and, by condensing the moisture, it is dehumidified. The condensation is collected in the tank 21 that contains the cooling water and is released together with the latter in a sequential way outside the drying machine 1.

The dehumidified air is conveyed by the air removal pipe 14, through the delivery commutator 18, into the delivery pipe 15, where it is once again heated by the resistance 10 before being reintroduced into the basket 2.

In this configuration, the delivery commutator 18 prevents both the suction of air by the suction pipe 16 into the delivery pipe 15 and the release of the air from the air removal pipe 14 into the release pipe 17, as is shown for example by figures 4 and 5.

Should the room, inside which the drying device 1 is installed, have an aeration that enables the disposal of a quantity of steam high enough to be usable for drying but not sufficient to permit the operation of an open circuit drying machine, the drying machine can be easily commutated by the activation of the levers 32, to hybrid operation, wherein the delivery flow sucked into the delivery pipe 15 is composed, by the delivery deviator 18, of two flows of controlled flow rates. A first flow consists in environment air sucked from outside the drying machine 1 through the suction pipe 16 and a second flow consists in recycled dehumidified air sucked from the air removal pipe 14. The excess air in the air removal pipe 14 is released, through the release pipe 17, to the outside of the drying machine.

In accordance with one embodiment, the filter 33 is inserted and extends along the stretch 14 of the vertical flow path and the stretch of the same flow path forms at least partially the condensation chamber 20 and the water collection tank 21.

The invention can be implemented with advantage in both front-loading and top loading laundry dryer and washer-dryer machines.

The invention achieves considerable advantages.

Firstly it involves a single appliance that can be adapted to the abovementioned several types of operation (open circuit, closed circuit, mixed circuit), wherein, in the open circuit operation mode, the dehumidifier means 20, 21, 24, 25, 26, i.e. the condensation system, is normally deactivated but can also be activated, for example, in a controlled way by means of the control unit of the drying machine, in order to lower in a controlled way, the charge of moisture in the air released into the environment.
The laundry drying machine has a very simple and sturdy structure, wherein the majority of the components serves a function in both the open circuit and closed circuit configuration. In fact, the closed circuit 14, 15 forms a portion of the open circuit 14, 15, 16, 17, i.e., both circuits have the delivery pipe 14 and the air removal pipe 14 in common. This makes the manufacture and maintenance of the apparatus easier and cheaper.

The drying machine is easily adaptable to different environments of installation and it provides high drying performance, using to the maximum the ability of the environment of installation to dispose of moisture.

The drying machine also enables, during production, to define through an adjustment operation, that is negligible from the point of view of the costs of production, the type of drying system - open or closed - of the final product.

Thanks to the invention it is therefore possible to save resources (material and energy) both during the production phase and during the use of the electric appliance.

Obviously, a man skilled in the art, in order to satisfy contingent and specific requirements, will be able to make further modifications and variants to the laundry drying machine of the present invention, all of which being contemplated within the scope of protection of this invention such as defined by the following claims.

## Claims

1. Laundry drying machine (1) comprising a support structure and casing (2) holding a basket or drum (3) to house the laundry, said basket (3) being in communication with a system of piping (14, 15, 16, 17) with associated ventilator means (8, 9) for conveying a flow of drying air (5) into the basket (3) and removing the moist air (7) from it, heating means (10) put in a heat-exchange relationship with the drying air (5), condenser means (20, 21, 22) suitable to dehumidify the moist air (7) removed from the basket (3), wherein commutation means are provided (18, 19) suitable to convert, selectively, said system of piping (14, 15, 16, 17) at least in:
- an open circuit (16, 15, 14, 17) that enables the ventilation means (8, 9) to suck air from the environment, convey it into the basket (3) and remove it from the latter in order to release it once again into the environment and the heating means (10) to heat the air sucked before it enters the basket (3) and in
- a closed circuit (15, 16) that enables the ventilation means (8, 9) to convey the air into the basket (3) and remove it from the latter in order to convey it once again to the basket (3), the heating means (10) to heat the air before it enters the basket (3) and the condenser means (20, 21, 22) to dehumidify the air before it is heated, wherein the Machine (1) can be commutated to a simultaneous operation of said open circuit (14, 15, 16, 17) and said closed circuit (14, 15),
wherein said system of piping comprises:
- an air removal pipe (14) in fluid communication with an outlet aperture (6) of the basket (3) ;
- a delivery pipe (15) in fluid communication with an inlet aperture (4) of the basket (3) ;
- a suction pipe (16) in fluid communication with a suction mouth (11) in order to withdraw air from the outside of the machine (1) ;
- a release pipe (17) in fluid communication with a release mouth (13) in order to release air outside the machine (1),
**characterised by**
- a delivery flow regulator (18) connecting the air removal pipe (14) with the delivery pipe (15) and adapted to regulate the flow aperture between the air removal pipe (14) and the delivery pipe (15) ;
- a release flow regulator (19) connecting the air removal pipe (14) with the release pipe (17) and adapted to regulate the flow aperture between the air removal pipe (14) and the release pipe (17);
- a suction flow regulator (18) interposed between the delivery pipe (15) and the suction pipe (16) and adapted to regulate the flow aperture between the suction pipe (16) and the delivery pipe (15),
so that the relationship between the flow rate in the open circuit (14, 15, 16, 17) and that in the closed circuit (14, 15) is adjustable.

2. The machine (1) according to claim 1, wherein said delivery (18), suction (18) and release (19) flow regulators can be activated independently from one another.

3. The machine (1) according to the claim 1, wherein said delivery (18), suction (18) and release (19) flow regulators can be activated in dependency with one another.

4. The machine (1) according to any preceding claim, wherein said delivery (18), suction (18) and release (19) flow regulators can be activated manually by one or more handles or levers (32) or by automatic activation means.

5. The machine (1) according to claim 1, wherein the delivery flow regulator (18) and the suction flow regulator (18) are formed by a single delivery flow deviator device (18), suitable to connect the delivery pipe (15), as desired, with the air removal pipe (14) or with the suction pipe (16).

6. The machine (1) according to claim 5, wherein the delivery flow deviator (18) is suitable to regulate the single flow rates of the air originating from the air removal (14) and suction pipes (16).

7. The machine (1) according to claim 1, comprising a single deviator, suitable to compose the airflow fed into the delivery pipe (15) through regulation of the individual flow rates of air originating from the air removal (14) and suction (16) pipes and to deviate into the release pipe (17) that portion of the airflow of the air removal pipe (14) that is not fed into the delivery pipe (15).

8. The machine (1) according to any one of claims 1 to 7, wherein the condenser means comprise a heat exchanger (20, 21, 22) formed by a condensation chamber (20) made in said air removal pipe (14) and provided with a tank (21) for the water that can be fed from the water supply by an aperture (22) in the wall of the air removal pipe (14) arranged in a position higher than the maximum water level (24).

9. The machine (1) according to claim 8, wherein said aperture (22) comprises a spray nozzle or nebuliser (22) for nebulising the cold water.

10. The machine (1) according to claim 8 or 9, wherein in the lowest point of the tank (21) a release (25) is provided associated to drainage means (25, 26), suitable to drain in an intermittent way the water connected in the tank (21).

11. The machine (1) according to any one of claims 5 to 10, wherein said delivery commutator (18) comprises a cylindrical or conical casing (27), fitted with three apertures (28, 29, 30) that form fluid connections with the air removal pipe (14), the delivery pipe (15) and the suction pipe (16), and an at least partially cylindrical or conical shutter element (31), held in a swivelling way inside the casing (27) and suitable to regulate respectively the opening and closure of said fluid connections (28, 29, 30).

12. The machine (1) according to any one of claims 5 to 11, wherein the delivery pipe (15) extends from the delivery commutator (18) to the inlet aperture (4) of the basket (3) and houses, in immediate adjacency to the delivery commutator (18), a rotor (8) forming said ventilation means (8, 9).

13. The machine (1) according to the claim 12, wherein a heating resistance (10) is arranged in the delivery pipe (15) downstream from the rotor (8) seen in the direction of the airflow.

14. The machine (1) according to any one of claims 1 to 13, wherein said release flow regulator (19) comprises a substantially cylindrical or conical casing fitted with two apertures that make the fluid communication between the air removal pipe (14) and the release pipe (17), and an at least partially cylindrical or conical shutter element held in a swivelling way inside the casing and suitable to regulate the flow of air released outside the machine (1).

15. The machine (1) according to any one of claims 5 to 13, wherein said release flow regulator (19) and said delivery commutator (18) can be automatically activated by suitable activation means, such as one or more electrical motors, that can be controlled by a control unit of the machine (1).

16. The machine (1) according to any one of the preceding claims, wherein said closed circuit (14, 15) forms a portion of said open circuit (14, 15, 16, 17).

## Patentansprüche

1. Wäschetrocknermaschine (1), umfassend eine Trägerstruktur und ein einen Korb oder eine Trommel (3) zur Aufnahme der Wäsche haltendes Gehäuse (2), wobei der Korb (3) zum Leiten einer Strömung einer trocknenden Luft (5) in den Korb (3) hinein und zum Entfernen der feuchten Luft (7) aus ihm in Kommunikation mit einem System von Rohrleitungen (14, 15, 16, 17) mit zugeordnetem Ventilationsmittel (8, 9) ist, ein Heizmittel (10), welches in einer Wärmeaustauschbeziehung mit trocknender Luft (5) gebracht ist, Kondensationsmittel (20, 21, 22), welche zum Entfeuchten der aus dem Korb (3) entfernten feuchten Luft (7) geeignet sind, wobei Umschaltmittel vorgesehen sind (18, 19), welche geeignet sind, das System von Rohrleitungen (14, 15, 16, 17) selektiv wenigstens zu konvertieren in:
- einen offenen Kreislauf (16, 15, 14, 17), welcher dem Ventilationsmittel (8, 9) ermöglicht, Luft aus der Umwelt zu saugen, sie in den Korb (3) zu leiten und sie aus dem Letzteren zu entfernen, um sie erneut in die Umwelt freizugeben und welcher dem Heizmittel (10) ermöglicht, die vorher angesaugte Luft zu heizen, bevor sie in den Korb (3) eintritt und in
- einen geschlossenen Kreislauf (15, 16), welcher dem Ventilationsmittel (8, 9) ermöglicht, die Luft in den Korb (3) zu leiten und sie aus dem Letzteren zu entfernen, um sie erneut zu dem Korb (3) zu leiten, welcher dem Heizmittel (10) ermöglicht, die Luft zu heizen, bevor sie in den Korb (3) eintritt und welcher den Kondensationsmitteln (20, 21, 22) ermöglicht, die Luft zu entfeuchten, bevor sie geheizt wird, wobei die Maschine (1) zu einem simultanen Betrieb des offenen Kreislaufs (14, 15, 16, 17) und des geschlossenen Kreislaufs (14, 15) umgeschaltet werden kann, wobei das System von Rohrleitungen umfasst:
- ein Luftentfernungsrohr (14) in Fluidkommunikation mit einer Auslassapertur (6) des Korbs (3);
- ein Zuführungsrohr (15) in Fluidkommunikation mit einer Einlassapertur (4) des Korbs (3);
- ein Saugrohr (16) in Fluidkommunikation mit einem Saugmund (11), um dem Außenraum der Maschine (1) Luft zu entnehmen;
- ein Freigaberohr (17) in Fluidkommunikation mit einem Freigabemund (13), um Luft außerhalb der Maschine (1) freizugeben,
**gekennzeichnet durch**
- eine Zuführungsströmungregelungseinheit/- steuerungseinheit (18), welche das Luftentfernungsrohr (14) mit dem Zuführungsrohr (15) verbindet und welche dafür eingerichtet ist, die Strömungsapertur zwischen dem Luftentfernungsrohr (14) und dem Zuführungsrohr (15) zu regeln/zu steuern;
- eine Freigabeströmungregelungseinheit/- steuerungseinheit (19), welche das Luftentfernungsrohr (14) mit dem Freigaberohr (17) verbindet und welche dafür eingerichtet ist, die Strömungsapertur zwischen dem Luftentfernungsrohr (14) und dem Freigaberohr (17) zu regeln/zu steuern;
- eine Saugströmungregelungseinheit/-steuerungseinheit (18), welche zwischen das Zuführungsrohr (15) und das Saugrohr (16) eingefügt ist und welche dafür eingerichtet ist, die Strömungsapertur zwischen dem Saugrohr (16) und dem Zuführungsrohr (15) so zu regeln/zu steuern, dass die Beziehung zwischen der Strömungsrate in dem offenen Kreislauf (14, 15, 16, 17) und derjenigen in dem geschlossenen Kreislauf (14, 15) einstellbar ist.

2. Maschine (1) nach Anspruch 1, wobei die Zuführungs-(18), Saug- (18) und Freigabe- (19) - strömungregelungseinheiten/-steuerungseinheiten unabhängig voneinander aktiviert werden können.

3. Maschine (1) nach Anspruch 1, wobei die Zuführungs-(18), Saug- (18) und Freigabe- (19) - strömungregelungseinheiten/-steuerungseinheiten in Abhängigkeit voneinander aktiviert werden können.

4. Maschine (1) nach einem der vorhergehenden Ansprüche, wobei die Zuführungs- (18), Saug- (18) und Freigabe- (19) -strömungregelungseinheiten/- steuerungseinheiten manuell durch einen oder mehr Griffe oder Hebel (32) oder durch ein automatisches Aktivierungsmittel aktiviert werden können.

5. Maschine (1) nach Anspruch 1, wobei die Zuführungsströmungregelungseinheit/-steuerungseinheit (18) und die Saugströmungregelungseinheit/- steuerungseinheit (18) durch eine einzelne Zuführungsströmungsablenkvorrichtung (18) gebildet sind, welche geeignet ist, um das Zuführungsrohr (15), wie gewünscht, mit dem Luftentfernungsrohr (14) oder mit dem Saugrohr (16) zu verbinden.

6. Maschine (1) nach Anspruch 5, wobei der Zuführungsströmungsablenker (18) geeignet ist, die einzelnen Strömungsraten der aus den Luftentfernungs-(14) und Saug- (16) -rohren stammenden Luft, zu regeln/zu steuern.

7. Maschine (1) nach Anspruch 1, umfassend einen einzelnen Ablenker, welcher geeignet ist, die in das Zuführungsrohr (15) eingegebene Luftströmung durch Regeln/Steuern der individuellen Strömungsraten von aus den Luftentfernungs- (14) und Saug- (16) -rohren stammender Luft, zusammenzustellen und welcher geeignet ist in das Freigaberohr (17) denjenigen Teil der Luftströmung von dem Luftentfernungsrohr (14) abzuleiten, welcher nicht in das Zuführungsrohr (15) eingegeben wird.

8. Maschine (1) nach einem der Ansprüche 1 bis 7, wobei die Kondensationsmittel einen Wärmetauscher (20, 21, 22) umfassen, welcher durch eine Kondensationskammer (20) geformt ist, welche in dem Luftentfernungsrohr (14) gebildet und mit einem Tank (21) für das Wasser versehen ist, welches von der Wasserversorgung durch eine Apertur (22), welche in einer höher als der maximale Wasserstand (24) liegenden Position angeordnet ist, in der Wand des Luftentfernungsrohrs (14) eingegeben werden kann.

9. Maschine (1) nach Anspruch 8, wobei die Apertur (22) eine Spritzdüse oder ein Vernebelungsapparat (22) zum Vernebeln des kalten Wassers umfasst.

10. Maschine (1) nach Anspruch 8 oder 9, wobei in dem untersten Punkt des Tanks (21) eine in dem Tank (21) angeschlossene Freigabevorrichtung (25) vorgesehen ist, welche mit einem Ableitungsmittel (25, 26) assoziiert ist und welche geeignet ist, das Wasser in einer zeitweisen Art abzulassen.

11. Maschine (1) nach einem der Ansprüche 5 bis 10, wobei der Zuführungsumschalter (18) ein zylindrisches oder konisches Gehäuse (27), welches mit drei Aperturen (28, 29, 30), welche Fluidverbindungen mit dem Luftentfernungsrohr (14), dem Zuführungsrohr (15) und dem Saugrohr (16) bilden, versehen ist, und ein zumindest teilweise zylindrisches oder konisches Verschlusselement (31) umfasst, welches in einer schwenkbaren Art innerhalb des Gehäuses (27) gehalten wird, und welches geeignet ist, jeweils das Öffnen und Schließen der Fluidverbindungen (28, 29, 30) zu regeln/zu steuern.

12. Maschine (1) nach einem der Ansprüche 5 bis 11, wobei das Zuführungsrohr (15) sich von dem Zuführungsumschalter (18) zu der Einlassapertur (4) des Korbs (3) erstreckt, und welches in unmittelbarer Nachbarschaft des Zuführungsumschalters (18) einen das Ventilationsmittel (8, 9) bildenden Rotor (8) beherbergt.

13. Maschine (1) nach Anspruch 12, wobei ein Heizwiderstand (10) in dem Zuführungsrohr (15) stromabwärts von dem Rotor (8), in der Richtung der Luftströmung betrachtet, angeordnet ist.

14. Maschine (1) nach einem der Ansprüche 1 bis 13, wobei die Freigabeströmungregelungseinheit/- steuerungseinheit (19) ein im Wesentlichen zylindrisches oder konisches Gehäuse, welches mit zwei Aperturen, welche Fluidverbindungen mit dem Luftentfernungsrohr (14) und dem Freigaberohr (17) formen, versehen ist, und ein zumindest teilweise zylindrisches oder konisches Verschlusselement umfasst, welches in einer schwenkbaren Art innerhalb des Gehäuses gehalten wird und welches geeignet ist, die Strömung von Luft, welche außerhalb der Maschine (1) freigegeben wird, zu regeln/zu steuern.

15. Maschine (1) nach einem der Ansprüche 5 bis 13, wobei die Freigabeströmungregelungseinheit/- steuerungseinheit (19) und der Zuführungsumschalter (18) durch geeignete Aktivierungsmittel, wie zum Beispiel einen oder mehrere elektrische Motoren, welche durch eine Regelungs-/Steuerungseinheit der Maschine (1) geregelt/gesteuert werden können, automatisch aktiviert werden können.

16. Maschine (1) nach einem der vorhergehenden Ansprüche, wobei der geschlossene Kreislauf (14, 15) einen Teil des offenen Kreislaufs (14, 15, 16, 17) formt.

## Revendications

1. Sèche-linge (1) comprenant une structure de support et un carter (2) supportant un panier ou tambour (3) pour recevoir le linge, ledit panier (3) étant en communication avec un système de tuyauterie (14, 15, 16, 17) avec des moyens formant ventilateur (8, 9) associés pour transporter un écoulement d'air de séchage (5) dans le panier (3) et retirer l'air humide (7) de celui-ci, des moyens de chauffage (10) placés dans une relation d'échange de chaleur avec l'air de séchage (5), des moyens formant condenseur (20, 21, 22) appropriés pour déshumidifier l'air humide (7) retiré du panier (3), dans lequel des moyens de commutation (18, 19) sont prévus appropriés pour convertir, de manière sélective, ledit système de tuyauterie (14, 15, 16, 17) au moins en :
- un circuit ouvert (16, 15, 14, 17) qui permet aux moyens de ventilation (8, 9) d'aspirer l'air de l'environnement, de le transporter dans le panier (3) et de le retirer de ce dernier afin de l'évacuer une fois encore dans l'environnement et aux moyens de chauffage (10) de chauffer l'air aspiré, avant qu'il n'entre dans le panier (3), et en
- un circuit fermé (15, 16) qui permet aux moyens de ventilation (8, 9) de transporter l'air dans le panier (3) et de le retirer de ce dernier afin de le transporter une fois encore vers le panier (3), aux moyens de chauffage (10) de chauffer l'air avant qu'il n'entre dans le panier (3) et aux moyens formant condenseur (20, 21, 22) de déshumidifier l'air avant qu'il ne soit chauffé, dans lequel la machine (1) peut être commutée vers un fonctionnement simultané dudit circuit ouvert (14, 15, 16, 17) et dudit circuit fermé (14, 15),
dans lequel ledit système de tuyauterie comprend :
- un tuyau de retrait d'air (14) en communication fluidique avec une ouverture de sortie (6) du panier (3) ;
- un tuyau de distribution (15) en communication fluidique avec une ouverture d'entrée (4) du panier (3) ;
- un tuyau d'aspiration (16) en communication fluidique avec une ouverture d'aspiration (11) afin d'aspirer de l'air de l'extérieur de la machine (1) ;
- un tuyau d'évacuation (17) en communication fluidique avec une ouverture d'évacuation (13) afin d'évacuer l'air à l'extérieur de la machine (1),
**caractérisé par**
- un régulateur de débit de distribution (18) reliant le tuyau de retrait d'air (14) au tuyau de distribution (15) et conçu pour réguler l'ouverture d'écoulement entre le tuyau de retrait d'air (14) et le tuyau de distribution (15) ;
- un régulateur de débit d'évacuation (19) reliant le tuyau de retrait d'air (14) au tuyau d'évacuation (17) et conçu pour réguler l'ouverture d'écoulement entre le tuyau de retrait d'air (14) et le tuyau d'évacuation (17) ;
- un régulateur de débit d'aspiration (18) interposé entre le tuyau de distribution (15) et le tuyau d'aspiration (16) et conçu pour réguler l'ouverture d'écoulement entre le tuyau d'aspiration (16) et le tuyau de distribution (15),
de sorte que la relation entre le débit dans le circuit ouvert (14, 15, 16, 17) et celui dans le circuit fermé (14, 15) puisse être ajustée.

2. Machine (1) selon la revendication 1, dans laquelle lesdits régulateurs de débit de distribution (18), d'aspiration (18) et d'évacuation (19) peuvent être activés indépendamment les uns des autres.

3. Machine (1) selon la revendication 1, dans laquelle lesdits régulateurs de débit de distribution (18), d'aspiration (18) et d'évacuation (19) peuvent être activés les uns en fonction des autres.

4. Machine (1) selon l'une quelconque des revendications précédentes, dans laquelle lesdits régulateurs de débit de distribution (18), d'aspiration (18) et d'évacuation (19) peuvent être activés manuellement au moyen d'un ou de plusieurs poignées ou leviers (32) ou par des moyens d'activation automatique.

5. Machine (1) selon la revendication 1, dans laquelle le régulateur de débit de distribution (18) et le régulateur de débit d'aspiration (18) sont formés par un dispositif de déviation d'écoulement de distribution (18) unique, approprié pour relier le tuyau de distribution (15), selon les souhaits, au tuyau de retrait d'air (14) ou au tuyau d'aspiration (16).

6. Machine (1) selon la revendication 5, dans laquelle le dispositif de déviation d'écoulement de distribution (18) est approprié pour réguler les débits uniques de l'air provenant des tuyaux de retrait d'air (14) et d'aspiration (16).

7. Machine (1) selon la revendication 1, comprenant un dispositif de déviation unique, approprié pour composer l'écoulement d'air amené dans le tuyau de distribution (15) par une régulation des débits individuels de l'air provenant des tuyaux de retrait d'air (14) et d'aspiration (16) et pour dévier dans le tuyau d'évacuation (17) la partie de l'écoulement d'air du tuyau de retrait d'air (14) qui n'est pas fournie au tuyau de distribution (15).

8. Machine (1) selon l'une quelconque des revendications 1 à 7, dans laquelle les moyens formant condenseur comprennent un échangeur de chaleur (20, 21, 22) formé par une chambre de condensation (20) réalisée dans ledit tuyau de retrait d'air (14) et pourvue d'un réservoir (21) pour l'eau qui peut être fournie à partir de l'alimentation en eau par une ouverture (22) dans la paroi du tuyau de retrait d'air (14) agencée à une position plus haute que le niveau d'eau maximum (24).

9. Machine (1) selon la revendication 8, dans laquelle ladite ouverture (22) comprend une buse de pulvérisation ou nébuliseur (22) pour nébuliser l'eau froide.

10. Machine (1) selon la revendication 8 ou 9, dans laquelle, au point le plus bas du réservoir (21), une évacuation (25) est prévue associée à des moyens de vidange (25, 26), appropriés pour vidanger d'une manière intermittente l'eau, raccordés au réservoir (21).

11. Machine (1) selon l'une quelconque des revendications 5 à 10, dans laquelle ledit commutateur de distribution (18) comprend un carter cylindrique ou conique (27), pourvu de trois ouvertures (28, 29, 30) qui forment des liaisons fluidiques avec le tuyau de retrait d'air (14), le tuyau de distribution (15) et le tuyau d'aspiration (16), et un élément d'obturation au moins partiellement cylindrique ou conique (31), maintenu d'une manière pivotante à l'intérieur du carter (27) et approprié pour réguler respectivement l'ouverture et la fermeture desdites liaisons fluidiques (28, 29, 30).

12. Machine (1) selon l'une quelconque des revendications 5 à 11, dans laquelle le tuyau de distribution (15) s'étend du commutateur de distribution (18) jusqu'à l'ouverture d'entrée (4) du panier (3) et loge, d'une manière immédiatement adjacente au commutateur de distribution (18), un rotor (8) formant lesdits moyens de ventilation (8, 9).

13. Machine (1) selon la revendication 12, dans laquelle une résistance chauffante (10) est agencée dans le tuyau de distribution (15) en aval du rotor (8), tel que vu dans la direction de l'écoulement d'air.

14. Machine (1) selon l'une quelconque des revendications 1 à 13, dans laquelle ledit régulateur de débit d'évacuation (19) comprend un carter sensiblement cylindrique ou conique pourvu de deux ouvertures qui réalisent la communication fluidique entre le tuyau de retrait d'air (14) et le tuyau d'évacuation (17), et un élément d'obturation au moins partiellement cylindrique ou conique maintenu d'une manière pivotante à l'intérieur du carter et approprié pour réguler l'écoulement d'air évacué à l'extérieur de la machine (1).

15. Machine (1) selon l'une quelconque des revendications 5 à 13, dans laquelle ledit régulateur de débit d'évacuation (19) et ledit commutateur de distribution (18) peuvent être activés automatiquement par des moyens d'activation appropriés, tels qu'un ou plusieurs moteurs électriques, qui peuvent être commandés par une unité de commande de la machine (1).

16. Machine (1) selon l'une quelconque des revendications précédentes, dans laquelle ledit circuit fermé (14, 15) forme une partie dudit circuit ouvert (14, 15, 16, 17).
